**Europäisches Patentamt**

**European Patent Office**

**Office européen des brevets**

(19)

(11) Veröffentlichungsnummer: **0 109 534**
**B1**

(12) # EUROPÄISCHE PATENTSCHRIFT

(45) Veröffentlichungstag der Patentschrift:
**03.02.88**

(51) Int. Cl.⁴: **A 23 G 3/20,** A 23 G 3/02, A 23 G 3/06

(21) Anmeldenummer: **83110217.3**

(22) Anmeldetag: **13.10.83**

(54) **Vorrichtung zum Egalisieren der Oberfläche eines Körpers.**

(30) Priorität: **26.10.82 DE 3239644**

(43) Veröffentlichungstag der Anmeldung:
**30.05.84 Patentblatt 84/22**

(45) Bekanntmachung des Hinweises auf die Patenterteilung:
**03.02.88 Patentblatt 88/5**

(84) Benannte Vertragsstaaten:
**BE CH FR IT LI LU**

(56) Entgegenhaltungen:
**DE-C-429 195**
**FR-A-807 539**
**GB-A-2 015 906**
**US-A-2 327 245**

(73) Patentinhaber: **Ferrero oHG, D-3570 Stadtallendorf 1 (DE)**

(72) Erfinder: **Müller, Günter, Ferreroring 28, D-3570 Stadtallendorf (DE)**

(74) Vertreter: **Lehn, Werner, Dipl.- Ing., Hoffmann, Eitle & Partner Patentanwälte Arabellastrasse 4, D-8000 München 81 (DE)**

EP 0 109 534 B1

## Beschreibung

Die Erfindung bezieht sich auf eine Vorrichtung zum Egalisieren der Oberfläche eines rotationssymmetrischen Körpers, insbesondere einer kugelförmigen, mit Granulat bestreuten Praline gemäß dem Obergriff des Anspruchs 1.

Beispielsweise wird eine kugelförmige Praline dadurch hergestellt, daß ein kugeliger, gefüllter Waffelgrundkörper mit einer Schokoladenmasse überzogen und dann dieser überzogene Flächenbereich mit einem Granulat, beispielsweise Nußgranulat (Nußsplitter), bestreut wird. In einem solchen Fall stehen nach dem Aufstreuen die Granulatsplitter in einer möglicherweise etwas unregelmäßigen Anhäufung und einer unregelmäßigen Ausrichtung von der Oberfläche ab. Dabei sind die Granulatsplitter unterschiedlich tief in die Schokoladenmasse eingetaucht. Diese Unregelmäßigkeit beeinträchtigt nicht nur das Äußere der Praline, sondern führt möglicherweise auch dazu, daß die am weitesten abstehenden Granulatsplitter beim Verpacken der Praline in einer sehr dünnen Aluminiumfolie die Folie durchstoßen.

Insbesondere wenn nach dem Aufbringen des Granulats die Praline mit einem weiteren Schokoladenüberzug versehen werden soll, wird weniger Schokoladenmasse für eine gleichmäßige Oberfläche benötigt, wenn vorher das Granulat auf der Oberfläche vergleichmäßigt wird. Insbesondere aber führt die Vergleichmäßigung zu einer besseren Rundheit der kugelförmigen Praline.

Es ist aus der FR-A-807 539 bekannt, zur Herstellung von kugelförmigen Pralinen eine Vorrichtung zu verwenden, welche zwei um ihre eigene Achse drehbare, parallel einander gegenüberliegende Walzen aufweist, in denen aufeinander zu gerichtete, in Achsrichtung hintereinander angeordnete, ringförmige Formnischen ausgebildet sind. Diese Walzen drehen sich in gleicher Richtung. In die Formnischen wird ein quaderförmiger Rohling eingeführt, welcher nicht zwischen den Walzen durchfallen kann. Durch die Drehung der Walzen wird dieser quaderförmige Rohling in eine Kugelform gebracht. Sobald die Kugelform hergestellt ist, wird die kugelförmige Praline durch eine besondere Ausbildung der Walzen und der Formnischen automatisch auf ein unterhalb der Walzen durchlaufendes Förderband abgegeben.

Es ist Aufgabe der Erfindung eine Vorrichtung zum Egalisieren der Oberfläche eines rotationssymmetrischen Körpers, insbesondere einer kugelförmigen, mit Granulat bestreuten Praline zu schaffen, welche nicht nur dem Körper ein optimal rundes Aussehen und eine solche Oberfläche verleiht, daß ein möglicherweise sehr dünnes Verpackungsmaterial nicht beim Verpacken beschädigt wird, sondern auch das Egalisieren während des Transportes der Körper in Richtung auf die nächste Bearbeitungsstation ermöglicht.

Diese Aufgabe wird erfindungsgemäß durch die Merkmale des Anspruchs 1 gelöst.

Dadurch, daß die Vielzahl von Walzen entlang einer Endlosbahn in Richtung senkrecht zur Walzenachse bewegbar sind, kann das Egalisieren der Oberfläche während der sich drehenden Walzen während des Transportes der Körper in Richtung auf eine nächste Bearbeitungsstation erfolgen.

Entsprechend dieser Lösung liegen die zu egalisierenden Körper aufgrund ihrer Schwerkraft in den Formnischen der Walzen, welche während ihrer Drehung auch den Körper so drehen, daß innerhalb der Formnischen auf die gesamte Oberfläche des Körpers so eingewirkt wird, daß die Oberfläche egalisiert wird. Dies wirkt sich insbesondere vorteilhaft aus, wenn die Oberfläche des Körpers mit einem Granulat bestreut ist, welches normalerweise nach dem Bestreuen unregelmäßig von der Oberfläche absteht. Durch das Egalisieren werden alle Granulatsplitter flach auf die Oberfläche gedrückt, so daß keine Spitzen des Granulats über die Oberfläche vorstehen, insbesondere nicht, wenn später noch bestehende Zwischenräume, beispielsweise noch mit Schokolade, ausgefüllt werden.

Vorzugsweise sind entlang der Walzenachse mehrere Formnischen nacheinander angeordnet, so daß bei ein und demselben Vorgang mehrere Körper gleichzeitig hinsichtlich ihrer Oberfläche egalisiert werden können.

In besonderer Weiterbildung kann die Erzeugende jeder ringförmigen Formnische ein Kreisbogen sein, dessen Enden jeweils in Walzenachsenrichtung gesehen, in einen Zwischenabschnitt der Walze übergehen, wobei die Krümmungsmittelpunkte der Kreisbögen von einander gegenüberliegenden Formnischen der Walzen auf einer gedachten Linie liegen, die um einen von 90° abweichenden Winkel zu den Walzenachsen liegt, so daß jeweils ein Ende des Kreisbogens der Formnische der einen Walze über eine mittig zwischen den Walzenachsen und parallel zu diesen liegenden Mittellinie in Richtung auf die andere Walze vorsteht und das andere Ende in Richtung auf die eigene Walze zurücksteht, wobei dies bei der Formnische der gegenüberliegenden anderen Walze umgekehrt der Fall ist.

Dadurch wird dem Körper sowohl um eine parallel zu den Walzenachsen liegende Achse als auch zu einer Achse, die im Winkel dazu liegt, eine Drehung erteilt, so daß tatsächlich die gesamte Oberfläche erfaßt und egalisiert werden kann.

Eine weitere vorteilhafte Ausgestaltung ergibt sich dadurch, daß, in einer Richtung der Walzenachsen gesehen, das vordere Ende der Kurvenbahn der ersten Formnische einer Walze in Richtung auf die andere Walze über die genannte Mittellinie vorsteht und das hintere Ende dieser Kurvenbahn in Richtung auf die eigene Walze zurücksteht und dort in einen Zwischenabschnitt relativ kleineren Durchmessers übergeht, an den sich das vordere Ende der Kurvenbahn der nachfolgenden Formnische anschließt, deren hinteres Kurvenbahnende wiederum über die genannte Mittellinie vorsteht und in einen Zwischenabschnitt relativ größeren Durchmessers übergeht, an den sich wiederum das vordere Ende der Kurvenbahn der nächsten Formnische anschließt, welches ebenfalls über die genannte Mittellinie vorsteht, und daß die Formnischen der anderen, gegenüberliegenden Walze entsprechend asymmetrisch angeordnet sind, so daß einem Zwischenabschnitt relativ kleineren Durchmessers der einen Walze ein Zwischenabschnitt relativ größeren Durchmessers der anderen Walze gegenüberliegt und umgekehrt.

Diese besondere Ausgestaltung ermöglicht eine optimale Zuordnung der Walzen bei der Gewährleistung der gleichzeitigen Bearbeitung einer möglichst größen Anzahl von Körpern.

Vorzugsweise sind die Zwischenabschnitte im wesentlichen zylindrisch ausgebildet. In besonders vorteilhafter Weise jedoch ist nur der Zwischenabschnitt relativ kleineren Durchmessers zylindrisch ausgebildet und der Zwischenabschnitt relativ größeren Durchmessers ist mit einer ringförmigen, über den Umfang verlaufenden Vertiefung versehen. Diese Vertiefung gewährleistet die Vermeidung eines Vermahlens von von der Oberfläche abfallenden Granulatsplittern zwischen den sich gleichsinnig drehenden Walzen. Dadurch daß die Vertiefung in dem Zwischenabschnitt relativ größeren Durchmessers angeordnet ist, kann der Rumpfdurchmesser der Walze relativ klein gemacht werden, insbesondere wenn die Formnischen und die Zwischenabschnitte von vorgefertigten Teilstücken gebildet werden, die auf eine Welle aufgekeilt werden.

Jede Walze ist vorzugsweise in Kettengliedern mindestens einer angetriebenen, endlos umlaufenden ersten Kette drehbar gelagert. Im Zusammenhang damit kann eine zweite, getrennt antreibbare, umlaufende Kette vorgesehen sein, in deren Kettenglieder mit den Walzen fest verbundene Kettenräder eingreifen. Mittels dieser zweiten Kette kann eine beliebige Steuerung der Walzendrehung erfolgen, und zwar richtungsmäßig und drehzahlmäßig, je nachdem ob die zweite Kette in der einen oder der anderen Richtung angetrieben wird oder möglicherweise stillsteht.

Die Erfindung wird in der nachfolgenden Beschreibung anhand der in den Zeichnungen rein schematisch dargestellten Ausführungsbeispielen näher erläutert. Es zeigt:

Fig 1 eine schematische Draufsicht auf zwei nur in Längsrichtung teilweise dargestellten Walzen zum Egalisieren von strichpunktiert angedeuteten kugelförmigen Pralinen, zusammen mit dem Antriebsmechanismus,

Fig. 2 eine schematische Seitenansicht einer entlang einer Umlaufbahn angeordneten Vielzahl von Walzen und

Fig. 3 eine Schnittansicht durch die Anordnung gemäß Fig. 1.

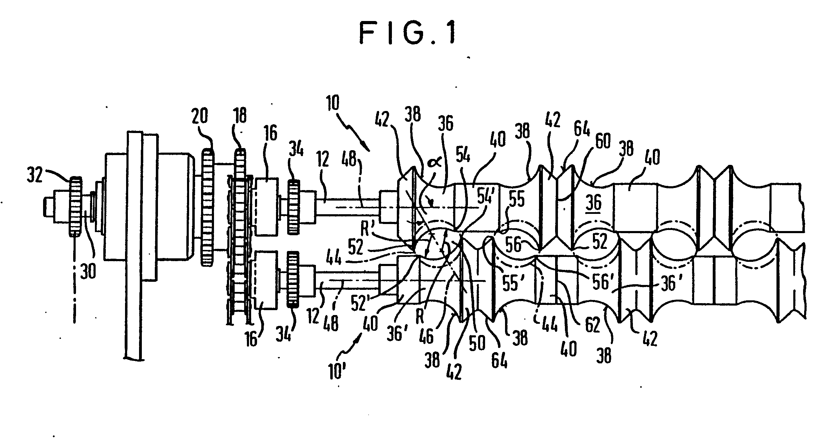

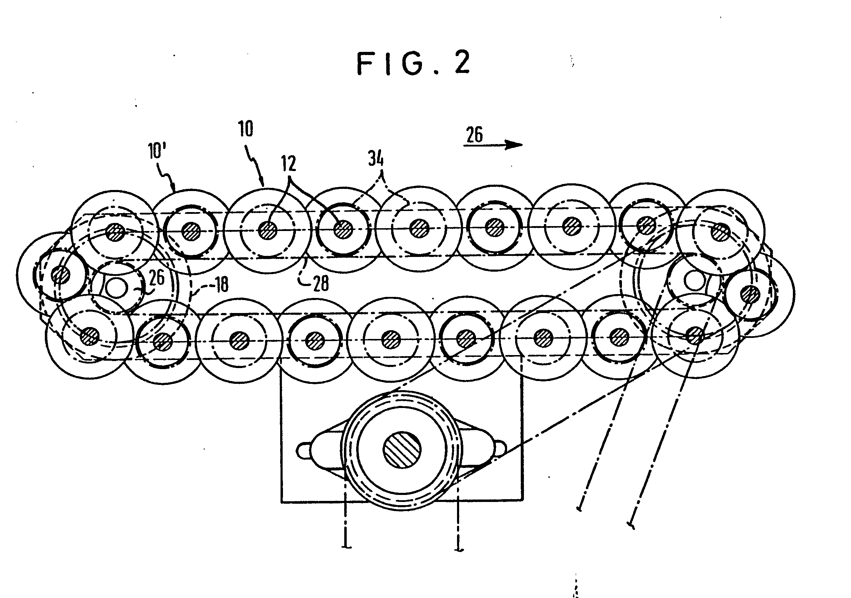

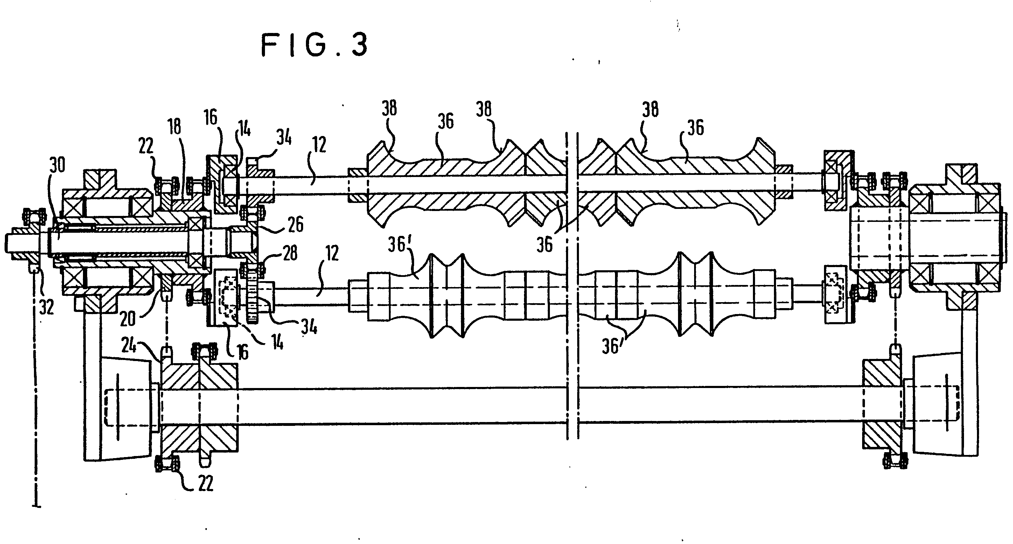

Aus Fig. 1 sind zwei Walzen 10 ersichtlich, die entsprechend Fig. 2 entlang einer Endlos-Umlaufbahn angeordnet sind. Von dieser Vielzahl von Walzen sind in Fig. 1 und 3 jeweils nur zwei einander zugeordnete Walzen dargestellt. Die beiden dort dargestellten Wilzentypen 10 und 10' wechseln in Richtung der Umlaufbahn einander ab. Die Walzen bestehen im wesentlichen aus Wellen 12 und darauf aufgesetzten Formstücken, die im einzelnen noch zu beschreiben sind. Zunächst jedoch soll der Antriebsmechanismus anhand Fig. 3 beschrieben werden.

Jede Welle 12, wobei die in Fig. 3 dargestellten Wellen nicht die einander zugeordneten Wellen sind, sondern die Wellen des oberen bzw. des unteren Trums, ist mittels eines Wälzlagers 14 in einem Kettenglied 16 gelagert, welches Kettenglied in ein Kettenrad 18 eingreift. Dieses Kettenrad 18 ist über ein Kettenrad 20, eine Kette 22 und ein weiteres Kettenrad 24 gesondert angetrieben, so daß sich die Wellen 12 und somit die Walzen 10 und 10' entlang einer Umlaufrichtung bewegen, wie in Fig. 2 durch den Pfeil 26 angedeutet ist. Diese Bewegung dient in erster Linie dem Transport der zu egalisierenden Pralinen, während dessen durch die sich drehenden Walzen 10 und 10' das Egalisieren der Oberfläche der Pralinen erfolgt.

In Fig. 2 befindet sich in den Umlenkbereichen der Umlaufbahn jeweils ein Kettenrad 26 mit einer innerhalb der Umlaufbahn der Walzen 10, 10' umlaufenden zweiten Kette 28, die über eine Welle 30 und ein Kettenrad 32 (Fig. 3) getrennt angetrieben ist. In die Kette 28 greifen Kettenräder 34 ein, von denen jeweils eines auf mindestens einer Seite der Welle 12 drehfest angebracht ist.

Über den Antrieb 22, 20, 18, 16 erfolgt eine Bewegung der Walzen 10, 10' entlang einer geschlossen Umlaufbahn. Wenn dabei die Kette 28 stillsteht, werden die in die Kette eingreifenden Kettenräder 34 angetrieben. Je nachdem in welcher Richtung die Kette 28 und mit welcher Geschwindigkeit diese angetrieben wird, oder möglicherweise stillsteht, erfolgt die entsprechende Drehung der Walzen hinsichtlich Richtung und Drehzahl, und zwar jeweils in Anpassung in die jeweiligen zu egalisierenden Oberflächen.

Auf jede Welle 12 sind eine Vielzahl von Formstücken 36, 36' aufgeschoben, wie dies insbesondere ius Fig. 1 und 3 ersichtlich ist. Diese Formstücke, welche natürlich auch auf andere Weise entlang der Walze aufgeteilt sein können, sind zwei verschiedene Formstücke, einerseits die Formstücke 36 für die Walze 10 und die Formstücke 36' für die Walze 10'. Die Walzen sind mit ringförmigen Nischen 38 versehen, deren Erzeugende eine Kurvenbahn ist und vorzugsweise ein Kreisbogen. Zwischen den Nischen 38 befindet sich einerseits ein Zwischenabschnitt 40 relativ kleineren Durchmessers bzw. andererseits ein Zwischenabschnitt 42 relativ größeren Durchmessers. Zwischen Formnischen 38 parallel und gegenüberliegender Walzen 10, 10' liegen kugelförmige Pralinen 44, die durch strichpunktierte Linien in Fig. 1 schematisch angedeutet sind, ohne daß sie zwischen den Walzen hindurchfallen. Sie liegen lediglich aufgrund ihrer Schwerkraft in den von den Walzen gebildeten Nischen 38.

In Fig. 1 sind für die Kreisbogen der Nischen dort, wo die kugelförmige Praline 44 ganz links schematisch eingezeichnet ist, die jeweiligen Kreismittelpunkte R und R'. Die Verbindungslinie 46 dieser Mittelpunkte liegt in einem Winkel α zur Walzenmittellinie 48, welcher kleiner als 90° ist. Wenn sich bei einer derartigen Zuordnung der Nischen die Walzen 10 und 10' im gleichen Sinne drehen, so dreht sich die Praline 44 einerseits um eine Mittellinie 50, die parallel zu den Walzenachsen 48 liegt und andererseits um eine Achse, welche senkrecht zur Bezugslinie 46, die durch die Kreismittelpunkte R und R' verläuft. Dadurch wird ein gleichmäßigerer und besserer Egalisiervorgang erzielt.

Durch diese besondere Ausrichtung der Kreisbogen liegt, in Fig. 1 von links nach rechts aufeinanderfolgend betrachtet, das vordere Ende 52 der Kurvenbahn der ersten Nische 38 der einen Walze 10 in Richtung auf die andere Walze 10' über die Mittellinie 50, welche mittig zwischen den Walzenachsen 48 und parallel zu dieser liegt, um einen bestimmten Betrag vor. Das hintere Ende 54 dieser Kurvenbahn liegt in Richtung auf die eigene Walze 10 hinter dieser Mittellinie 50 um einen bestimmten Abstand zurück und geht dort in den Zwischenabschnitt 40 relativ kleineren Durchmessers über, welcher in diesem Falle zylindrisch ausgebildet ist. An diesen Mittelabschnitt 40 schließt sich dann wiederum das vordere Ende 55 der Kurvenbahn der nächsten Nische 38 an, und steht dabei ebenfalls in Richtung auf die eigene Walze 10 hinter der genannten Mittellinie 50 in gleichem Maße zurück wie das vorgenannte Ende 54. Das hintere Ende 56 der Kurvenbahn dieser Formnische 38 steht wiederum Richtung auf die andere Walze 10' über die Mittellinie 50 vor und geht in den Zwischenabschnitt 42 relativ größeren Durchmessers über. Daran schließt sich dann wieder eine Formnische an, die der erstgenannten Formnische entspricht. Auf der anderen Walze 10' ist die Zuordnung der Nischen asymmetrisch zu den vorgenannten Nischen der Walze 10. Bei den Formstücken 36 der einen Walze 10 liegt die Trennlinie 60 zwischen den Formstücken 36 in der Mitte des Zwischenabschnittes 42 relativ größeren Durchmessers. Bei den Formstücken 36' der anderen Walze 10' liegt eine Trennlinie 62 in der Mitte der Zwischenabschnitte 40 relativ kleinen Durchmessers. Bei den parallel zueinander und gegenüberliegenden Walzen 10 und 10' liegt jeweils ein Zwischenabschnitt 40 relativ kleineren Durchmessers einem Zwischenabschnitt 42 relativ größeren Durchmessers gegenüber. Dabei sind bevorzugt die Zwischenabschnitte 40 relativ kleineren Durchmessers zylindrisch ausgebildet. Die Zwischenabschnitte 42 relativ größeren Durchmessers sind mit einer über den Umfang verlaufenden Ringvertiefung 64 versehen, so daß zwischen den gegenüberliegenden Zwischenabschnitten genügend Raum verbleibt, in dem Granulatsplitter (beispielsweise Nußsplitter) hindurchfallen können, welche auf der Oberfläche der zu egalisierenden Praline sich befinden und beim Egalisieren möglicherweise abfallen können, ohne daß diese abfallenden Nußsplitter zwischen den Walzen vermahlen würden. Dieses vermahlen würde aus den Nußsplittern Öl auspressen, welches frühzeitig zum Ranzigwerden der Praline führen kann.

**Patentansprüche**

1. Vorrichtung zum Egalisieren der Oberfläche eines rotationssymmetrischen Körpers, wie Praline, Schokoladenware bzw. Konfekt, insbesondere einer kugelförmigen, mit Granulat bestreuten Praline, mit an die Form des rotationssymmetrischen Körpers angepaßten, um ihre Eigenachse drehbaren, parallel zueinander ausgerichteten Walzen, auf denen ringförmige Formnischen ausgebildet sind, welche mit den Formnischen benachbarter Walzen Formräume zur Aufnahme jeweils eines der rotationssymmetrischen Körper bilden, dadurch gekennzeichnet, daß eine Vielzahl von einander zugeordneten Walzen (10, 10') entlang einer Endlosbahn in Richtung senkrecht zur Walzenachse (48) bewegbar sind, und daß der Abstand der Walzen voneinander ein Durchfallen der Körper zwischen den Walzen ausschließt.

2. Vorrichtung nach Anspruch 1, dadurch gekennzeichnet, daß entlang der Walzenachse (48) mehrere Formnischen (38) nacheinander angeordnet sind.

3. Vorrichtung nach Anspruch 1, dadurch gekennzeichnet, daß die Erzeugende jeder ringförmigen Formnische (38) ein Kreisbogen ist, dessen Enden (52, 54, 55, 56) jeweils, in Walzenachsrichtung gesehen, in einen Zwischenabschnitt (40; 42) der Walze (10, 10') übergehen, wobei die Krümmungsmittelpunkte (R, R') von einander gegenüberliegenden Formnischen (28) der Walzen auf einer gedachten Linie (46) liegen, die im von 90° abweichenden Winkel (α) zu den Walzenachsen (48) liegt, so daß jeweils ein Ende des Kreisbogens (52; 56) der Formnische (38) der einen Walze (10) über eine mittig zwischen den Walzenachsen (48) und parallel zu diesen liegenden Mittellinie (50) in Richtung auf die andere Walze (10') vorsteht und das andere Ende (54'; 55') in Richtung auf die eigene Walze (10') zurücksteht, wobei dies bei den zugehörigen Formnischen (38) der gegenüberliegenden anderen Walze (10') umgekehrt der Fall ist.

4. Vorrichtung nach Anspruch 2 und 3, dadurch gekennzeichnet, daß in einer Richtung der Walzenachsen (48) gesehen, das vordere Ende (52) der Kreisbahn der ersten Formnische (38) einer Walze (10) in Richtung auf die andere Walze (10') über die genannte Mittellinie (50) vorsteht und das hintere Ende (54) dieser Kreisbahn in Richtung auf die eigene Walze (10) zurücksteht und dort in einen Zwischenabschnitt (40) relativ kleineren Durchmessers übergeht, an den sich das vordere Ende (55) der Kreisbahn der nachfolgenden Formnische (38) anschließt, deren hinteres Kreisbahnende (56) wiederum über die genannte Mittellinie (50) vorsteht und in einen Zwischenabschnitt (42) relativ größeren Durchmessers übergeht, an den sich wiederum das vordere Ende (52) der Kreisbahn der nächsten Formnische (38) anschließt, welches ebenfalls über die genannte Mittel: linie (50) vorsteht, und daß die Formnischen (38) der anderen, gegenüberliegenden Walze (10') entsprechend asymmetrisch angeordnet sind, so daß einem Zwischenabschnitt (40) relativ kleineren Durchmessers der einen Walze (10) ein Zwischenabschnitt (42) relativ größeren Durchmessers der anderen Walze (10') gegenüberliegt und umgekehrt.

5. Vorrichtung nach Anspruch 4, dadurch gekennzeichnet, daß die Zwischenabschnitte (40; 42) im wesentlichen zylindrisch ausgebildet sind.

6. Vorrichtung nach Anspruch 4, dadurch gekennzeichnet, daß der Zwischenabschnitt (40) relativ kleineren Durchmessers zylindrisch ausgebildet ist, und daß der Zwischenabschnitt (42) relativ größeren Durchmessers mit einer ringförmigen, über den Umfang verlaufenden Vertiefung (64) versehen ist.

7. Vorrichtung nach Anspruch 1, dadurch gekennzeichnet, daß jede Walze (10, 10') in Kettengliedern (16) mindestens einer angetriebenen, endlos umlaufenden ersten Kette drehbar gelagert ist.

8. Vorrichtung nach Anspruch 7, dadurch gekennzeichnet, daß eine getrennt antreibbare, umlaufende zweite Kette (28) vorgesehen ist, in deren Kettengliedern mit den Walzen (10, 10') drehfest verbundene Kettenräder (34) eingreifen.

**Claims**

1. Device for smoothing the surface of a rotationally symmetrical body such as pralines, chocolates or confectionery, in particular a spherically shaped praline coated with granules, having rolls rotatable about their own axis and arranged parallel to each other and being suited to the form of the rotationally symmetrical body, on said rolls annular shaping recesses being formed, which form shaping cavities with the shaping recesses of neighbouring rolls, for the reception of in each case one of the rotationally symmetrical bodies, characterized in that a plurality of mutually associated rolls (10, 10') are movable along an endless band in the direction perpendicular to the roll axis (48), and that the distance of the rolls to each other prevents the body from falling down between the rolls.

2. Device according to claim 1, characterized in that several shaping recesses (38) are arranged sequentially along the roll axis (48).

3. Device according to claim 1, characterized in that the genetrix of each annular shaping recess (38) is an arc of a circle, whose ends (52, 54, 55, 56) in each case, as seen in the direction of the roller axis, merge into an intermediate portion (40; 42) of the roller (10, 10'), the middle point of the arc (R, R') of adjacently opposite shaping recesses (28) of the rolls lying on a theoretical line (46), which lies in the angle (α) deviating from 90° to the roll axes (48), so that in each case one end of the arc of the circle (52; 56) of the shaping recess (38) of the one roll (10) projects, in the direction towards the other roll (10') beyond a centre line (50) lying mid-way between the roll axes (48) and parallel thereto and that the other end (54'; 55') is set back in the direction of its own roll (10'), and inversely for the complementary shaping recesses (38) of the opposite other roll (10').

4. Device according to claims 2 or 3, characterized in that, as seen in the direction of the roller axes (48), the front end (52) of the circular arc of the first shaping recess (38) of a roll (10) projects, in the direction towards the other roll (10'), beyond said centre line and the rear end (54) of this circular arc is set back in the direction towards its own roll (10) and here merges into an intermediate portion (40) of a relatively small diameter, at which point the front end (55) of the circular arc of the next following shaping recess (38) begins, whose rear circular arc end (56) projects beyond said centre line (50) and merges into an intermediate portion (42) of a relatively large diameter, at which point the front end (52) of the circular arc of the next shaping recess (38) begins, which also projects beyond said centre line (50) and that the shaping recesses (38) of the other, opposite roll (10) are arranged correspondingly asymmetric, so that an intermediate portion (40) of relatively small diameter of the one roll (10) lies opposite to an intermediate portion (42) of relatively large diameter of the other roll (10') and vice versa.

5. Device according to claim 4, characterized in that the intermediate portions (40; 42) are formed mainly symmetrically.

6. Device according to claim 4, characterized in that the intermediate portion (40) of relatively small diameter is formed cylindrically and that the intermediate portion (42) of relatively large diameter is provided with an annular depression (64) running circumferentially.

7. Device according to claim 1, characterized in that each roll (10, 10') is rotatably journaled in chain links (16) of at least one driven endlessly circulating first chain.

8. Device according to claim 7, characterized in that a separately drivable circulating second chain (28) is provided in whose chain links, chain wheels (34) engage which are non-rotatably connected to the rolls (10, 10').

**Revendications**

1. Appareillage pour égaliser la surface d'un corps à symétrie de révolution, comme une praline, un produit en chocolat ou de la confiserie, notamment une praline de forme sphérique qui a été saupoudrée de granulat, comportant des cylindres adaptés à la forme du corps à symétrie de révolution, orientés parallèlement entre eux, pouvant tourner autour de leur propre axe et sur lesquels sont formés des creux de formage de forme annulaire, qui créent avec les creux de formage de cylindres adjacents des volumes de forme servant à recevoir respectivement un des corps à symétrie de révolution, caractérisé en ce qu'un grand nombre de cylindres mutuellenent associés (10, 10') est déplaçable le long d'une voie sans fin dans une direction perpendiculaire à l'axe de cylindre (48) et en ce que l'espacement mutuel des cylindres exclut un passage des corps en chute entre les cylindres.

2. Appareillage selon la revendication 1, caractérisé en ce que plusieurs creux de formage (38) sont disposés l'un après l'autre le long de l'axe de cylindre (48).

3. Appareillage selon la revendication 1, caractérisé en ce que la génératrice de chaque creux de formage de forme annulaire (38) est un arc de cercle dont les extrémités (52, 54, 55, 56), en considérant la direction de l'axe de cylindre, se prolongent respectivement par un tronçon intermédiaire (40; 42) des cylindres (10, 10'), les centres de courbure (R, R') de creux de formage (28) placés l'un en regard de l'autre sur les cylindres étant situés sur une droite imaginaire (46), qui fait un angle ($\alpha$) différant de 90° avec les axes de cylindres (48) de telle sorte qu'à chaque fois une extrémité de l'arc de cercle (52; 56) des creux de formage (38) d'un des cylindres (10) est placée, en direction de l'autre cylindre (10'), au-dessus d'une médiatrice (50), située au milieu entre les axes de cylindres (48) et parallèlement à ceux-ci, tandis que l'autre extrémité (54'; 55') est placée en dessous de ladite médiatrice en direction du cylindre associé (10'), cette disposition étant inversée pour les creux de formage correspondants (38) de l'autre cylindre (10') placé en regard.

4. Appareillage selon les revendications 2 et 3, caractérisé en ce que, en considérant une direction des axes de cylindres (48), l'extrémité avant (52) de la courbure du premier creux de formage (38) d'un cylindre (10) est placée, en direction de l'autre cylindre (10'), au-dessus de la médiatrice précitée (50) tandis que l'extrémité arrière (54) de cette courbure est placée en dessous de ladite médiatrice, en direction du cylindre associé (10), et se prolonge par un tronçon intermédiaire (40) de diamètre relativement petit, auquel est reliée l'extrémité avant (55) de la courbure du creux de formage suivant (38), dont l'extrémité arrière de courbure (56) est à nouveau située audessus de la médiatrice précitée (50) et se prolonge par un tronçon intermédiaire (42) de diamètre relativement grand, auquel est à nouveau reliée l'extrémité avant (52) de la courbure du creux de formage suivant (38), qui est également placée au-dessus de la médiatrice précitée (50), et en ce que les creux de formage (38) de l'autre cylindre (10') placé en regard sont disposés asymétriquement en correspondance, de telle sorte qu'un tronçon intermédiaire (40) de diamètre relativement petit d'un des cylindres (10) soit placée en regard d'un tronçon intermédiaire (42) de diamètre relativement grand de l'autre cylindre (10'), et inversement.

5. Appareillage selon la revendication 4, caractérisé en ce que les tronçons intermédiaires (40; 42) ont une forme sensiblement cylindrique.

6. Appareillage selon la revendication 4, caractérisé en ce que le tronçon intermédiaire (40) de diamètre relativement petit a une forme cylindrique et en ce que le tronçon intermédiaire (42) de diamètre relativement grand est pourvu d'un évidement (64) de forme annulaire s'étendant sur la périphérie.

7. Appareillage selon la revendication 1, caractérisé en ce que chaque cylindre (10, 10') est monté de façon tournante dans des maillons (16) d'au moins une première chaîne entrainée et tournant sans fin.

8. Appareillage selon la revendication 7, caractérisé en ce qu'il est prévu une seconde chaîne (28) tournante pouvant être entraînée séparément et dont les maillons sont en prise avec des pignons de chaîne (34) reliés sans possibilité de rotation relative aux cylindres (10, 10').

FIG. 1

FIG. 2

F I G . 3